# EUROPÄISCHE PATENTSCHRIFT

(11) **EP 2 197 720 B1**
(45) Veröffentlichungstag und Bekanntmachung des Hinweises auf die Patenterteilung: **23.03.2016**
(21) Anmeldenummer: 08785675.3
(22) Anmeldetag: 22.08.2008
(51) Int. Cl.: B60T 17/08

(54) **FEDERSPEICHERBREMSZYLINDER MIT VERRASTETEM ANSCHLAGKÖRPER**
SPRING-LOADED BRAKE CYLINDER HAVING LOCKED STOP BODY
CYLINDRE DE FREIN À ACCUMULATEUR À RESSORT COMPORTANT UN CORPS DE BUTÉE ENCASTRÉ

(30) Priorität: 04.09.2007 DE 102007041769
(43) Veröffentlichungstag der Anmeldung: 23.06.2010
(73) Patentinhaber: KNORR-BREMSE Systeme für Nutzfahrzeuge GmbH, 80809 München (DE)
(72) Erfinder: LANQUETOT, Jacques, F-14360 Trouville/Mer (FR); DEROUAULT, Sylvain, F-14100 Hermival les Vaux (FR)
(74) Vertreter: Mattusch, Gundula
(86) Internationale Anmeldenummer: PCT/EP2008/006914
(87) Internationale Veröffentlichungsnummer: WO 2009/030380

(56) Entgegenhaltungen:
- WO-A-02/44004
- WO-A-97/07322
- DE-A1- 19 630 795
- US-A- 5 943 940

## Beschreibung

### Stand der Technik

Die vorliegende Erfindung betrifft einen Federspeicherbremszylinder, der insbesondere in Nutzfahrzeugen angewendet wird.

Ein derartiger Federspeicherbremszylinder weist üblicherweise ein Gehäuse auf, in welchem ein Federspeicherbremskolben geführt ist, der den Innenraum des Gehäuses in eine druckbeaufschlagbare Federspeicherbremskammer und eine eine Speicherfeder aufnehmende Federkammer unterteilt. In der Federkammer ist die Speicherfeder so angeordnet, dass sie den Federspeicherbremskolben in Richtung zur Federspeicherbremskammer vorspannt. Damit ein abgestelltes bzw. gebremstes Fahrzeug, in welchem der Federspeicherbremszylinder angeordnet ist, bewegt werden kann, wird die Federspeicherbremskammer derart mit Druckluft beaufschlagt, dass der Federspeicherbremskolben entgegen der Federkraft der Speicherfeder verschoben wird. Dadurch gelangt eine mit dem Federspeicherbremskolben gekoppelte Bremseinrichtung außer Eingriff mit einer Bremsscheibe oder dergleichen, so dass das Fahrzeug nicht weiter gebremst ist. Für Bremsbetätigungen während der Fahrt kann ein derartiger Federspeicherbremszylinder in bekannter Weise mit einem Betriebsbremszylinder gekoppelt sein.

Kommt es nun aufgrund eines Druckabfalls im System zu einer wesentlichen Reduzierung des Luftdrucks in der Federspeicherbremskammer, wird der Federspeicherbremskolben aufgrund der Vorspannung der Speicherfeder derart in Richtung zur Federspeicherbremskammer verschoben, dass die mit dem Federspeicherbremskolben gekoppelte Bremseinrichtung greift und eine Bremsung des Fahrzeugs ausführt. Damit soll beispielsweise bei einem Leitungsabriss der Bremsdruckleitung während der Fahrt zuverlässig verhindert werden, dass ein Nutzfahrzeug ungebremst weiterfährt und somit schwer kontrollierbar wird. Diese Zwangsbremsung bei mangelnder Druckluftzufuhr wird zudem auch bei über längere Zeit abgestellten Anhängern etc. genutzt, damit ein unbeabsichtigtes Wegrollen dieser Fahrzeuge verhindert werden kann.

Die somit durch die mechanische Speicherfeder im Federspeicherbremszylinder in derartigen Fällen ausgeübte Bremswirkung soll jedoch beispielsweise zum Verschieben abgestellter Fahrzeuge oder zum Räumen einer aufgrund einer Panne blockierten Fahrspur wieder gelöst werden können, damit die betreffenden Fahrzeuge bewegt und z. B. Verkehrsbehinderungen aufgehoben werden können.

Da die vorhandene Druckluftversorgung hierbei jedoch häufig durch Leitungsabriss etc. beschädigt ist und nicht eingesetzt werden kann und auch keine ergänzende Druckluftversorgung vorhanden ist, ist es in der Praxis erforderlich, dass derartige Federspeicherbremszylinder eine mechanische Notlöseeinrichtung aufweisen. Diese ist üblicherweise mit einer Betätigungseinrichtung in Gestalt einer Gewindespindel versehen, die von außen zugänglich und drehbar betätigbar ist. Diese Gewindespindel wirkt dabei in einer bekannten Bauweise, wie sie in der DE 198 30 154 A1 beschrieben ist, mit einem in Axialrichtung feststehend am Gehäuse des Federspeicherbremszylinders angeordneten Abtriebelement, wie z. B. einer Mutter zusammen, so dass eine Drehung der Gewindespindel eine lineare Verschiebung derselben bewirkt. Hierbei ist bei dieser konkreten Ausführungsform beispielsweise das in axialer Richtung innere Ende der Gewindespindel mit einem Überstand ausgebildet, der mit einer Anlagefläche am Federspeicherkolben in Anlage gebracht werden kann. Aufgrund der durch die Drehbewegung eingeleiteten linearen Versetzung der Gewindespindel in Axialrichtung kommt es somit zu einer ebenfalls linearen Verschiebung des Federspeicherkolbens entgegen der Vorspannkraft der Speicherfeder, so dass hierdurch die mit dem Federspeicherkolben zusammenwirkende Bremseinrichtung gelöst werden kann.

Diese Bauweise hat sich hinsichtlich ihrer Funktionalität in der Praxis bewährt. Allerdings weist sie den Nachteil auf, dass die Gewindespindel zum mechanischen Notlösen relativ weit aus dem Gehäuse herausgedreht werden muss, was zu einem erheblichen Platzbedarf auf dieser Seite des Federspeicherbremszylinders führt.

Dieser Raum ist jedoch für andere Komponenten am Nutzfahrzeug vorgesehen oder wird durch andere bewegte Komponenten begrenzt.

Um diesem Problem zu begegnen, schlägt die gattungsbildende WO 02/44004 eine andere Bauweise der mechanischen Notlöseeinrichtung vor. Bei diesem Gestaltungsvorschlag ist die Gewindespindel in Axialrichtung feststehend am Gehäuse des Federspeicherbremszylinders festgelegt. Gleichzeitig ist die Gewindespindel jedoch drehbar gelagert und am von außen zugänglichen Ende mit einer Angriffsfläche für ein Drehwerkzeug wie z. B. mit einem Sechskantkopf oder dgl. Versehen, mittels dem die Gewindespindel in Drehung versetzt werden kann. Diese Gewindespindel greift in einen zentralen Hohlraum des Federspeicherkolbens ein, wobei die Gewindespindel hier mit einer Sechskantmutter in Eingriff steht, die im Inneren des Federspeicherkolbens nicht drehbar, dabei jedoch in Axialrichtung verschiebbar gelagert ist. Zum Lösen der Federspeicherbremse wird die Gewindespindel hier derart drehend betätigt, dass die hierauf ablaufende Mutter gegen eine Anlagefläche am Federspeicherkolben geführt wird und bei weiterer Drehung der Gewindespindel eine Mitnahme des Federspeicherkolbens entgegen der Vorspannung der Speicherfeder bewirkt. Diese Bauweise hat den wesentlichen Vorteil, dass hier kein außenseitiger Freiraum für eine herausdrehende Gewindespindel erforderlich ist.

Die bekannte Notlöseeinrichtung weist ferner eine Indikatoreinrichtung mit einem Indikatorstab auf, der einen Anzeigeabschnitt aufweist. Der Indikatorstab durchgreift hierbei die Gewindespindel mittig und ist darin derart geführt, dass eine Bewegung in Axialrichtung möglich ist. Hierbei ist der Indikatorstab mittels einer Feder gegenüber einem Stufenabschnitt in der Gewindespindel so vorgespannt, dass der Anzeigeabschnitt nach außen gedrückt wird. Je nachdem, ob der Federspeicherbremszylinder sich in notgelöstem Zustand befindet oder nicht, steht der Anzeigeabschnitt des Indikatorstabs über die Gewindespindel nach außen vor oder er ist in ihr versenkt, was ein sichtbares Signal für den Zustand des Federspeicherbremszylinders darstellt.

An dem vom Anzeigeabschnitt fernen Ende des Indikatorstabs ist eine quer zur Axialrichtung angeordnete und als Anschlag dienende Scheibe angeordnet, die umfangsseitig derart übersteht, dass der äußere Rand der Scheibe mit der Mutter in Anlage gelangen kann. Die Scheibe ist hierbei durch eine Sicherungsscheibe am Steuerabschnitt des Indikatorstabs festgelegt. Da jedoch Bauteile der Notlöseeinrichtung wie diese Scheibe und deren Sicherungsscheibe im Inneren des Federspeicherbremszylinders angeordnet sind, ist die Montage jedoch erschwert.

Es ist daher Aufgabe der vorliegenden Erfindung einen Federspeicherbremszylinder dieser Art derart weiterzubilden, dass er einfacher und kostengünstiger montiert werden kann.

Diese Aufgabe wird durch die Merkmale von Anspruch 1 gelöst.

### Offenbarung der Erfindung

Die Erfindung sieht vor zum einen vor, dass der Anschlagkörper mit dem Indikatorstab durch eine mittels einer axialen Relativbewegung zwischen dem Indikatorstab und dem Anschlagkörper gefertigte Rastverbindung formschlüssig verbunden ist. Dann kann die Verbindung zwischen dem Indikatorstab und dem Anschlagkörper lediglich mittels der Relativbewegung hergestellt werden, ohne dass es jedoch hierzu notwendig ist, dass ein Zugang zu der Verbindungsstelle möglich ist. Vielmehr kann die Relativbewegung von außen, d.h. von außerhalb des Gehäuses her hervorgerufen werden, beispielsweise dadurch, dass der Indikatorstab von außen her in die für ihn vorgesehene Durchgangsöffnung der Gewindespindel so tief eingeführt wird, dass sein Ende mit dem Anschlagkörper verrastet. Dadurch ergibt sich gegenüber dem eingangs genannten Stand der Technik gemäß WO 02/44004 der Vorteil, dass keine Sicherungsscheibe zum Halten der dort als Anschlagkörper dienenden Scheibe mehr montiert werden muss und sich der Fertigungsaufwand demgegenüber reduziert.

Zum andern ist der Anschlagkörper an der Federspeicherbremskolbenstange durch Federmittel federnd abgestützt sein, wenn der Indikatorstab gegen den Anschlagkörper zur Herstellung der Rastverbindung axial bewegt wird.

Durch die in den Unteransprüchen aufgeführten Maßnahmen sind vorteilhafte Weiterbildungen und Verbesserungen der in den unabhängigen Ansprüchen angegebenen Erfindung möglich.

Besonders bevorzugt ist der Anschlagkörper wenigstens im Bereich eines Randes einer Aufnahmeöffnung für das Ende des Indikatorstabs derart elastisch ausgebildet, dass der Rand der Aufnahmeöffnung von einem am Ende des Indikatorstabs ausgebildeten und gegenüber dem Durchmesser der Aufnahmeöffnung einen größeren Durchmesser aufweisenden Ringbund aufgrund der Relativbewegung zwischen dem Indikatorstab und dem Anschlagkörper passiert und hintergriffen werden kann.

Eine besonders platzsparende Anordnung ergibt sich, wenn der Anschlagkörper tassenförmig ausgebildet ist, mit einem die Aufnahmeöffnung aufweisenden Boden sowie mit einer in der Federspeicherbremskolbenstange linear geführten Mantelwandung und wenn die Öffnung des tassenförmigen Anschlagkörpers vom Indikatorstab weg weist und die Federmittel zumindest teilweise von dessen Mantelwandung umschlossen sind. Durch die flächige Mantelwandung ist außerdem eine kippfreie Lagerung des Anschlagkörpers in der Federspeicherbremskolbenstange möglich. Eine leichte Konstruktion ergibt sich, wenn der tassenförmige Anschlagkörper aus wenigstens einem Kunststoff gefertigt ist. Aus demselben Grund kann auch der Indikatorstab aus Kunststoff bestehen.

Gemäß einer Weiterbildung der oben genannten Maßnahme kann ein zentraler, die Aufnahmeöffnung aufweisender Bereich des tassenförmigen Anschlagkörpers als separates Bauteil ausgebildet sein, welches eine höhere Elastizität als der restliche Anschlagkörper aufweist, Dann erfolgt die Führung des Anschlagkörpers durch seine demgegenüber steifere Mantelwand, während die Verrastung mit dem Indikatorstab durch das zentrale, demgegenüber elastischere Bauteil erleichtert wird.

Beim Stand der Technik gemäß WO 02/44004 ist der aus dem Gehäuse ragende Kopf der Gewindespindel mehrteilig ausgebildet, wobei eine Ansatzfläche zum Ansetzen eines Werkzeugs an die Gewindespindel, um sie in Drehung zu versetzen, durch eine separate Büchse gebildet wird. Gemäß einer besonders bevorzugten Ausführungsform ist der Werkzeugansatz zum Ansetzen des Werkzeugs an der Gewindespindel mit ihr einstückig gefertigt, was in einer vorteilhaften Reduktion der Teilezahl der Notlöseeinrichtung resultiert.

### Zeichnung

Ein Ausführungsbeispiel der Erfindung ist in der Zeichnung dargestellt und in der nachfolgenden Beschreibung näher erläutert. In der Zeichnung zeigt die
- Fig.1: eine Querschnittsdarstellung eines Federspeicherbremszylinders mit einer Notlöseeinrichtung gemäß einer bevorzugten Ausführungsform der Erfindung;
- Fig.2: einen vergrößerten Ausschnitt der Notlöseeinrichtung von Fig.1.

### Beschreibung des Ausführungsbeispiels

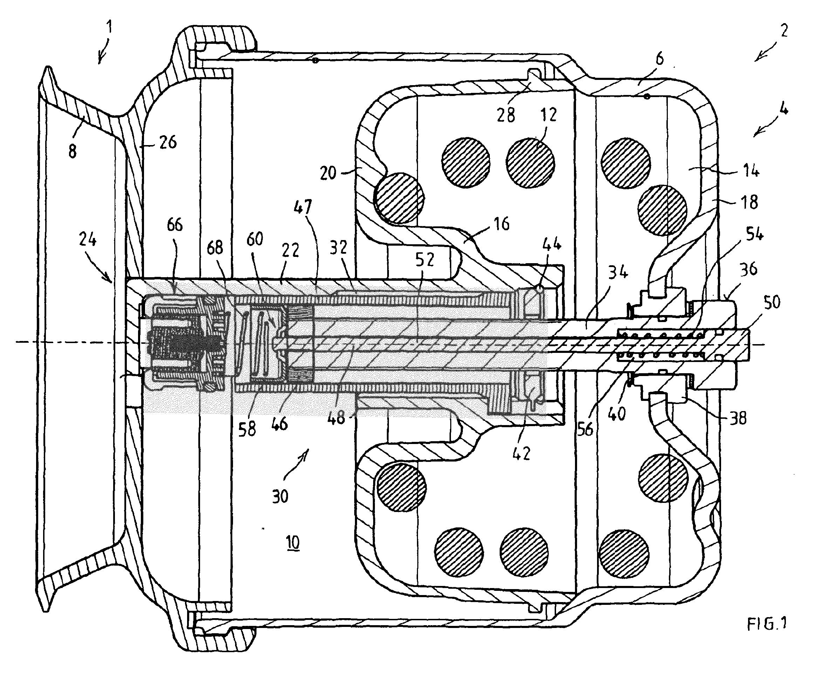

In Fig.1 ist ein Ausschnitt eines kombinierten Betriebsbrems- und Federspeicherbremszylinders 1 (Kombibremszylinder) eines pneumatischen oder elektropneumatischen Bremssystems eines Nutzfahrzeugs gezeigt. Diese umfasst eine hier nicht gezeigte Betriebsbremsvorrichtung mit einem Betriebsbremszylinder mit einem Gehäuse, in dem ein pneumatisch beaufschlagbarer Betriebsbremskolben geführt ist, welcher über eine Betriebsbremskolbenstange beispielsweise eine Scheibenbremse des Nutzfahrzeugs betätigt.

Der Kombizylinder 1 umfasst weiterhin eine in Fig.1 sichtbare Federspeicherbremseinrichtung 2 mit einem Federspeicherbremszylinder 4 mit einem Gehäuse 6, an welches ein Flansch 8 derart angekoppelt ist, dass das Gehäuse 6 und der Flansch 8 eine im wesentlichen abgeschlossene Einheit bilden. An den Flansch 8 kann beispielsweise der Betriebsbremszylinder angekoppelt werden. In dem Gehäuse 6 ist ein durch pneumatischen Druck in einer Federspeicherbremskammer 10 gegen die Federkraft einer Speicherfeder 12 in einer Federkammer 14 spannbarer Federspeicherbremskolben 16 geführt, durch welchen der Betriebsbremskolben in Bremszuspannrichtung beaufschlagbar ist. Diese Speicherfeder 12 stützt sich hierbei einerseits auf einem Boden 18 des Gehäuses 6 und andererseits an einem Kolbenteller 20 des Federspeicherbremskolbens 16 ab. Der Betriebsbremszylinder und der Federspeicherbremszylinder 4 bilden hintereinander koaxial angeordnet dann den Kombibremszylinder 1.

Eine Federspeicherbremskolbenstange 22 des Federspeicherbremskolbens 16 durchragt dichtend eine Durchgangsöffnung 24 in einer mit dem Flansch 8 einstückigen Trennwand 26 zwischen dem Federspeicherbremszylinder 4 und dem Betriebsbremszylinder und kann mit ihrer Stirnfläche am nicht gezeigten Betriebsbremskolben anschlagen. Überdies weist der Federspeicherbremskolben 16 noch einen Führungsabschnitt 28 auf, der umfangsseitig in einem Zylinderabschnitt des Gehäuses 6 abgedichtet geführt ist.

In bekannter Weise kann der Federspeicherbremskolben 16 gegen die Wirkung der Speicherfeder 12 durch Belüften der Federspeicherbremskammer 10 in Lösestellung gebracht werden. Weiterhin kann durch Belüften einer Betriebsbremskammer, welche sich zwischen der Trennwand 26 und dem Betriebsbremskolben erstreckt, Letzterer gegen die Wirkung einer sich einerseits am Betriebsbremskolben und andererseits an einer Stirnwand des Betriebsbremszylinders abstützenden Rückholfeder in Zuspannstellung gebracht werden.

Nicht zuletzt ist innerhalb der Federspeicherbremskolbenstange 22 wenigstens teilweise eine mechanische Notlöseeinrichtung 30 integriert, mit welcher die Federspeicherbremse bei Druckausfall not- oder hilfsgelöst werden kann. Mit Hilfe der Notlöseeinrichtung 30 ist ein mechanisches Notlösen der Federspeicherbremse durch manuelle äußere Einwirkung möglich. Die Notlöseeinrichtung 30 ist hierbei in dieser Ausführungsform zentrisch im Federspeicherbremszylinder 4 angeordnet und greift durch eine zentrale Öffnung des Gehäuses 6 in einen Hohlraum 32 der Federspeicherbremskolbenstange 22 ein. Sie weist hierbei eine Gewindespindel 34 auf, an deren äußerem Ende ein Sechskantkopf 36 ausgebildet ist.

Gemäß einer besonders bevorzugten Ausführungsform ist der Werkzeugansatz zum Ansetzen des Werkzeugs in Form des Sechskantkopfs 36 mit der Gewindespindel 34 einstückig ausgebildet und an diese angeformt. Die Gewindespindel 34 durchgreift eine Buchse bzw. ein Lagerteil 38 des Gehäuses 6 derart, dass sie darin abgedichtet geführt ist, um eine Drehbewegung ausführen zu können. Gleichzeitig ist die Gewindespindel 34 durch eine Sicherungsscheibe 40 an einer axialen Bewegung gegenüber dem Gehäuse 6 gehindert. In dem Hohlraum 32 der Federspeicherbremskolbenstange 22 ist weiterhin ein Anlageabschnitt 42 des Kolbentellers 20 angeordnet, beispielsweise in Form einer durch einen Sicherungsring 44 gehaltenen Scheibe, gegen welche eine mit der Gewindespindel 34 verschraubbare Mutter 46 anlaufen und dadurch den Federspeicherbremskolben 16 in Richtung auf den Boden 18 des Gehäuses 6 zu, d.h. in Bremslöserichtung mitnehmen kann.

Die Gewindespindel 34 und der Sechskantkopf 36 wirken hierbei als eine Betätigungseinrichtung, die mit einer Übertragungseinrichtung in Gestalt der Mutter 46 zusammenwirkt. Diese ist mit dem Gewindegang der Gewindespindel 34 derart in Eingriff, dass eine Drehbewegung der Gewindespindel 34 in eine lineare Bewegung der Mutter 46 in Axialrichtung übertragen wird. Hierzu ist die hier als Sechskantmutter ausgeführte Mutter 46 formschlüssig in einem Führungsteil 47 im Hohlraum 32 der Federspeicherbremskolbenstange 22 so aufgenommen, dass sie sich nicht verdrehen kann.

Die Notlöseeinrichtung 30 weist ferner eine Indikatoreinrichtung auf. Diese enthält einen Indikatorstab 48, der einen Anzeigeabschnitt 50 und einen hiervon abgestuften Steuerabschnitt 52 mit kleinerem Durchmesser aufweist. Der Indikatorstab 48 besteht vorzugsweise aus wenigstens einem Kunststoff und durchgreift die Gewindespindel 34 mittig und ist darin derart abgedichtet geführt, dass eine Bewegung in Axialrichtung möglich ist. Hierbei ist der Indikatorstab 48 mittels einer Feder 54 gegenüber einem Stufenabschnitt 56 in der Gewindespindel 34 so vorgespannt, dass der Anzeigeabschnitt 50 nach außen gedrückt wird.

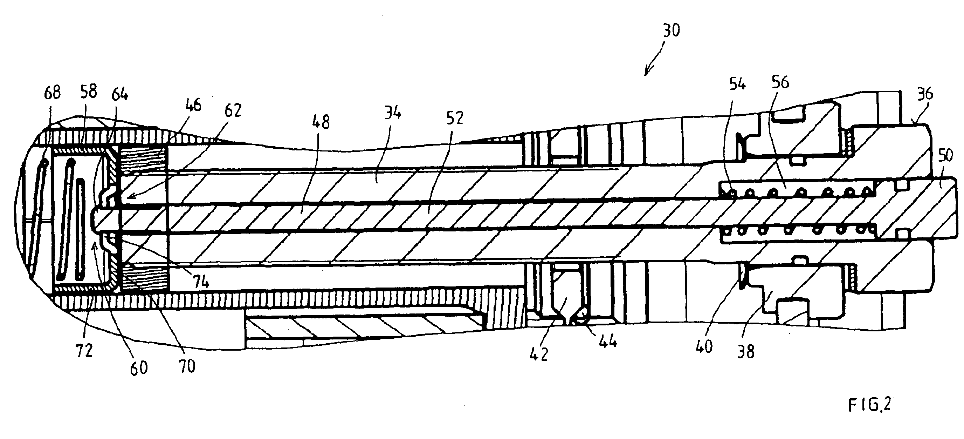

Wie am besten anhand von Fig.2 zu sehen ist, ist an dem vom Anzeigeabschnitt 50 fernen Ende des Steuerabschnitts 52 ein quer zur Axialrichtung angeordneter und als Anschlag dienender Anschlagkörper 58 vorhanden, der über die Gewindespindel 34 radial derart hinausragt, dass der äußere Rand des Anschlagkörpers 58 mit der Mutter 46 in Anlage gelangen kann. Der Anschlagkörper 58 ist mit dem Indikatorstab 48 durch eine mittels einer axialen Relativbewegung zwischen dem Indikatorstab 48 und dem Anschlagkörper 58 gefertigten lösbaren Rast- *oder* Clipsverbindung 60 formschlüssig verbunden.

Besonders bevorzugt ist der Anschlagkörper 58 wenigstens im Bereich eines Randes einer Aufnahmeöffnung 62 für das Ende des Indikatorstabs 48 derart elastisch ausgebildet, dass der Rand der Aufnahmeöffnung 62 von einem an dem Ende des Indikatorstabs 48 ausgebildeten und gegenüber dem Durchmesser der Aufnahmeöffnung 62 einen größeren Durchmesser aufweisenden Ringbund 64 aufgrund der Relativbewegung zwischen dem Indikatorstab 48 und dem Anschlagkörper 58 passiert und hintergriffen werden kann. Insbesondere ist der Anschlagkörper 58 über eine hier nicht näher erläuterte Belüftungseinrichtung 66 an der Federspeicherbremskolbenstange 22 durch Federmittel 68 federnd abgestützt, wenn der Indikatorstab 48 gegen den Anschlagkörper 58 zur Herstellung der Rastverbindung 60 axial bewegt wird.

Der Anschlagkörper 58 ist beispielsweise tassenförmig ausgebildet ist, mit einem die Aufnahmeöffnung 62 aufweisenden Boden 70 sowie mit einer in der Federspeicherbremskolbenstange 22 linear geführten Mantelwandung 72, wobei die Öffnung des tassenförmigen Anschlagkörpers 58 vom Indikatorstab 48 weg weist und die Federmittel 68 zumindest teilweise von dessen Mantelwandung 72 umschlossen sind. Bevorzugt ist der tassenförmige Anschlagkörper 58 aus wenigstens einem Kunststoff gefertigt.

Insbesondere ist der die Aufnahmeöffnung 62 aufweisende zentrale Bereich des tassenförmigen Anschlagkörpers 58 als separates Bauteil 74 in Form einer Scheibe ausgebildet, welche beispielsweise eine höhere Elastizität als der restliche Anschlagkörper 58 aufweist. Dann erfolgt die Führung des Anschlagkörpers 58 durch die steifere Mantelwandung 72, während die Rastverbindung 60 mit dem Indikatorstab 48 durch die zentrale, demgegenüber elastischere Scheibe 74 erleichtert wird, die in einer Öffnung im Boden 70 des restlichen steiferen Anschlagkörpers 58 radial gehalten ist.

Bei der Montage der Notlöseeinrichtung 30 wird zunächst bei zugespanntem Zustand der Federspeicherbremse, d.h. bei vom Boden 18 des Gehäuses 6 entferntem Federspeicherbremskolben 16 die Mutter 46 koaxial an den tassenförmigen Anschlagkörper 58 gesetzt. Sodann wird die Federspeicherbremskammer 10 des Federspeicherbremszylinders 4 belüftet, wodurch der sich Federspeicherbremskolben 16 in seine Löseendlage und die Federspeicherbremskolbenstange 22 zusammen mit dem tassenförmigen Anschlagkörper 58 und der Mutter 46 in Richtung auf das Ende der Gewindespindel 34 zu bewegt, bis die Mutter 46 am ersten Gewindegang der Gewindespindel 34 angreift. Sodann wird die Gewindespindel 34 von außerhalb des Gehäuses 6 verdreht, bis die Mutter 46 am Anlageabschnitt 42 des Kolbentelters 20 anliegt. Der Anschlagkörper 58 ist währenddessen durch die Federmittel 68 gegen das Ende der Gewindespindel 34 vorgespannt. Dann wird der Indikatorstab 48 linear nach innen geschoben, bis sein mit dem Ringbund 64 versehenes Ende den Rand der Aufnahmeöffnung 62 des Anschlagkörpers 58 unter radial elastischer Aufweitung derselben passiert und dann diesen Rand hintergreifend die lösbare Rast- oder Clipsverbindung 60 zwischen dem Indikatorstab 48 und dem Anschlagkörper 58 herstellt. Hierbei ist der Anschlagkörper 58 gegen die vom Indikatorstab 48 ausgeübte Druckkraft durch die Federmittel 68 an der Federspeicherbremskolbenstange 22 abgestützt. Die Rückfederung des Anschlagkörpers 58 mittels der Federmittel 68 nach dem Durchdringen der im Durchmesser etwas kleineren Ausnahmeöffnung im Vergleich zum Durchmesser des Ringbunds 64 unterstützt das Zustandekommen der Rastverbindung 60.

Zum Notlösen des Federspeicherbremszylinders durch die Notlöseeinrichtung 30, d.h. zum Aufheben der Bremswirkung der Federspeicherbremse wird der Sechskantkopf 36 der Gewindespindel 34 so verdreht, dass eine Seitenfläche der Mutter 46 an dem Anlageabschnitt 42 des Kolbentellers 20 anliegt und diesen im Zuge der Drehbewegung entgegen der Vorspannung der Speicherfeder 12 in Richtung zum Boden 18 des Gehäuses 6 zieht. Gemäß der Darstellung in Fig.1 ist der Anzeigeabschnitt 50 des Indikatorstabs 48 hierbei durch die Feder 54 so beaufschlagt, dass ein äußeres Ende hiervon nach außen über den Sechskantkopf 36 übersteht und dadurch anzeigt, dass der Federspeicherbremszylinder 4 notgelöst ist.

Soll nun die Federspeicherbremse wieder manuell zugespannt werden, so wird die Gewindespindel 34 mittels des Sechskantkopfs 36 derart gedreht, dass sich die Mutter 46 in Axialrichtung vom Boden 18 des Gehäuses 6 weg bewegt. Durch ein fortgesetztes Eindrehen der Mutter 46 in die Federspeicherbremskolbenstange 22 gelangt diese schließlich in Eingriff mit dem Anschlagkörper 58 der Indikatoreinrichtung und erzwingt dadurch eine lineare Verschiebung des Indikatorstabs 48 entgegen der Federkraft der Feder 54. Der Anzeigeabschnitt 50 wird dadurch derart relativ zum Sechskantkopf 36 bzw. dem äußeren Ende der Gewindespindel 34 bewegt, dass er eingezogen wird, bis er im wesentlichen bündig hierzu angeordnet ist. Hieran kann ein Benutzer dann erkennen, dass der Federspeicherbremszylinder 1 nicht manuell notgelöst ist.

Aufgrund der Vorspannung durch die Speicherfeder 12 folgt der Kolbenteller 20 dieser Bewegung, wobei die Seitenfläche der Mutter 46 in Anlage zum Anlageabschnitt 42 am Kolbenteller 20 bleibt. Mit dem Kolbenteller 20 bewegt sich auch die Federspeicherbremskolbenstange 22 vom Boden 18 des Gehäuses 6 weg, so dass eine Bremskraft auf die hier nicht dargestellte Betriebsbremseinrichtung jenseits des Flansches 8 ausgeübt wird. Sobald die maximale Bremskraft anliegt, folgt der Kolbenteller 20 der Mutter 46 jedoch nicht weiter.

Der Federspeicherbremszylinder 1 ist dann in der normalen Betriebsstellung, in der die Bremsbetätigung entweder durch Druckluftbeaufschlagung, oder falls keine Druckluft vorhanden ist, eine Bremswirkung durch die Speicherfeder 12 ausgelöst wird. Für einen normalen pneumatischen Betrieb des Federspeicherbremszylinders 2 wird durch einen hier nicht dargestellten Lufteinlass Druckluft in die Federspeicherbremskammer 10 derart gesteuert eingeführt, dass diese Druckluft die Federkraft der Speicherfeder 12 überwindet und so wahlweise, in Abhängigkeit von der Höhe des Drucks, die Bremse löst oder betätigt.

### Bezugszahlenliste

- 1: Kombizylinder
- 2: Federspeicherbremseinrichtung
- 4: Federspeicherbremszylinder
- 6: Gehäuse
- 8: Flansch
- 10: Federspeicherbremskammer
- 12: Speicherfeder
- 14: Federkammer
- 16: Federspeicherbremskolben
- 18: Boden
- 20: Kolbenteller
- 22: Federspeicherbremskolbenstange
- 24: Durchgangsöffnung
- 26: Trennwand
- 28: Führungsabschnitt
- 30: *Notlöseeinrichtung*
- 32: Hohlraum
- 34: Gewindespindel
- 36: Sechskantkopf
- 38: Buchse
- 40: Sicherungsscheibe
- 42: Anlageabschnitt
- 44: Sicherungsring
- 46: Mutter
- 47: Führungsteil
- 48: Indikatorstab
- 50: Anzeigeabschnitt
- 52: Steuerabschnitt
- 54: Feder
- 56: Stufenabschnitt
- 58: Anschlagkörper
- 60: Rastverbindung
- 62: Aufnahmeöffnung
- 64: Ringbund
- 66: Belüftungseinrichtung
- 68: Federmittel
- 70: Boden
- 72: Mantelwandung
- 74: Scheibe

## Patentansprüche

1. Federspeicherbremszylinder (4) für Fahrzeuge, mit wenigstens einem durch eine Speicherfeder (12) betätigbaren, in einem Gehäuse (6) gelagerten Federspeicherbremskolben (16), welcher auf der einen Seite von einer Federspeicherbremskammer (10) und auf der entgegengesetzten Seite von einer die Speicherfeder (12) aufnehmenden Federkammer (14) begrenzt und mit einer Federspeicherbremskolbenstange (22) verbunden ist, und mit einer mechanischen Notlöseeinrichtung (30) zum Notlösen des Federspeicherbremszylinders (4), wobei mittels der Notlöseeinrichtung (30) eine axiale Verschiebung des Federspeicherbremskolbens (16) entgegen der Vorspannung der Speicherfeder (12) bewirkbar ist und die Notlöseeinrichtung (30) eine drehbar am Gehäuse (6) festgelegte, mit einer axial verschiebbaren und undrehbar in der Notlöseeinrichtung (30) gehaltenen Übertragungseinrichtung (46) in Eingriff stehende Gewindespindel (34) aufweist, wobei die Übertragungseinrichtung (46) zum Notlösen des Federspeicherbremszylinders (4) mit einer Anlagefläche (42) am Federspeicherbremskolben (16) in Anlage bringbar ist, sowie mit einer Indikatoreinrichtung mit einem die Stellung des Federspeicherbremskolbens (16) anzeigenden Indikatorstab (48), welcher die Gewindespindel (34) durchgreift und gegenüber dieser in axialer Richtung verschiebbar ist, wobei im Bereich eines Endes des Indikatorstabs (48) ein Anschlagkörper (58) angeordnet ist, der mit der Übertragungseinrichtung (46) in Eingriff bringbar ist, **dadurch gekennzeichnet, dass** der Anschlagkörper (58) mit dem Indikatorstab (48) durch eine mittels einer axialen Relativbewegung zwischen dem Indikatorstab (48) und dem Anschlagkörper (58) gefertigte Rastverbindung (60) formschlüssig verbunden ist, wobei der Anschlagkörper (58) an der Federspeicherbremskolbenstange (22) durch Federmittel (68) federnd abstützbar ist, wenn der Indikatorstab (48) gegen den Anschlagkörper (58) zur Herstellung der Rastverbindung (60) axial bewegt wird.

2. Federspeicherbremszylinder nach Anspruch 1, **dadurch gekennzeichnet, dass** der Anschlagkörper (58) wenigstens im Bereich eines Randes einer Aufnahmeöffnung (62) für das Ende des Indikatorstabs (48) derart elastisch ausgebildet ist, dass der Rand der Aufnahmeöffnung (62) von einem am Ende des Indikatorstabs (48) ausgebildeten und gegenüber dem Durchmesser der Aufnahmeöffnung (62) einen größeren Durchmesser aufweisenden Ringbund (64) aufgrund der Relativbewegung zwischen dem Indikatorstab (48) und dem Anschlagkörper (58) passiert und hintergriffen werden kann.

3. Federspeicherbremszylinder nach Anspruch 2, **dadurch gekennzeichnet, dass** die Relativbewegung zwischen dem Indikatorstab (48) und dem Anschlagkörper (58) durch eine axiale Bewegung des Indikatorstabs (48) gegen den Anschlagkörper (58) gebildet wird, welcher an der Federspeicherbremskolbenstange (22) abgestützt ist.

4. Federspeicherbremszylinder nach einem der vorhergehenden Ansprüche, **dadurch gekennzeichnet, dass** der Anschlagkörper (58) tassenförmig ausgebildet ist, mit einem die Aufnahmeöffnung (62) aufweisenden Boden (70) sowie mit einer in der Federspeicherbremskolbenstange (22) linear geführten Mantelwandung (72).

5. Federspeicherbremszylinder nach Anspruch 4, **dadurch gekennzeichnet, dass** die Öffnung des tassenförmigen Anschlagkörpers (58) vom Indikatorstab (48) weg weist und die Federmittel (68) zumindest teilweise von dessen Mantelwandung (72) umschlossen sind.

6. Federspeicherbremszylinder nach einem der vorhergehenden Ansprüche, **dadurch gekennzeichnet, dass** der Anschlagkörper (58) aus wenigstens einem Kunststoff gefertigt ist.

7. Federspeicherbremszylinder nach Anspruch 6, **dadurch gekennzeichnet, dass** ein zentraler, die Aufnahmeöffnung (62) aufweisender Bereich des Anschlagkörpers (58) als separates Bauteil (74) ausgebildet ist, welches eine höhere Elastizität als der restliche Anschlagkörper (58) aufweist.

8. Federspeicherbremszylinder nach einem der vorhergehenden Ansprüche, **dadurch gekennzeichnet, dass** der Indikatorstab (48) aus wenigstens einem Kunststoff einstückig gefertigt ist.

9. Federspeicherbremszylinder nach einem der vorhergehenden Ansprüche, **dadurch gekennzeichnet, dass** ein Werkzeugansatz (36) zum Ansetzen eines Werkzeugs an der Gewindespindel (34) mit ihr einstückig gefertigt ist.

10. Federspeicherbremszylinder nach einem der vorhergehenden Ansprüche, **dadurch gekennzeichnet, dass** die Übertragungseinrichtung (46) eine Mutter beinhaltet.

11. Federspeicherbremszylinder nach einem der vorhergehenden Ansprüche, **dadurch gekennzeichnet, dass** er in einen kombinierten Betriebsbrems- und Federspeicherbremszylinder (1) integriert ist, mit wenigstens einem in einem Betriebsbremszylinder angeordneten, durch ein Druckmittel betätigbaren Betriebsbremskolben, welcher eine Betriebsbremskammer begrenzt und mit einer auf Bremsbetätigungselemente einwirkenden Betriebsbremskolbenstange verbunden ist, wobei sich die Federspeicherbremskolbenstange (22) durch eine Öffnung (24) einer Trennwand (26) zwischen dem Betriebsbremszylinder und dem Federspeicherbremszylinder (4) erstreckt, welche den Betriebsbremszylinder und den Federspeicherbremszylinder (4) voneinander trennt.

## Claims

1. Spring-loaded brake cylinder (4) for vehicles, having at least one spring-loaded brake piston (16) which can be actuated by a pre-loaded spring (12) and is mounted in a housing (6), which spring-loaded brake piston (16) is limited on one side by a spring-loaded brake chamber (10) and on the opposing side by a spring chamber (14) receiving the pre-loaded spring (12), and is connected to a spring-loaded brake piston rod (22), and having a mechanical emergency release device (30) for emergency release of the spring-loaded brake cylinder (4), wherein by means of the emergency release device (30) an axial displacement of the spring-loaded brake piston (16) can be brought about counter to the pre-loading of the pre-loaded spring (12), and the emergency release device (30) has a threaded spindle (34) fixed rotatably on the housing (6), engaging with a transmission device (46) that is held so that it is axially displaceable and non-rotatable in the emergency release device (30), wherein the transmission device (46) can be brought into contact with a bearing face (42) on the spring-loaded brake piston (16) for emergency release of the spring-loaded brake cylinder (4), and also having an indicator device with an indicator rod (48) showing the position of the spring-loaded brake piston (16), which indicator rod (48) engages through the threaded spindle (34) and can be displaced in an axial direction relative thereto, wherein in the region of an end of the indicator rod (48) a stop body (58) is arranged, which can be brought into engagement with the transmission device (46), **characterised in that** the stop body (58) is connected with positive-locking to the indicator rod (48) by a latching connection (60) produced by means of an axial relative movement between the indicator rod (48) and the stop body (58), wherein the stop body (58) is resiliently supported on the spring-loaded brake piston rod (22) by spring means (68) if the indicator rod (48) is axially moved against the stop body (58) to produce the latching connection (60).

2. Spring-loaded brake cylinder according to claim 1, **characterised in that** the stop body (58) is elastically formed at least in the region of an edge of a receiving opening (62) for the end of the indicator rod (48) so that an annular collar (64) formed at the end of the indicator rod (48) and having a larger diameter in relation to the diameter of the receiving opening (62) can pass through the edge of the receiving opening (62) and reach behind the edge position due to the relative movement between the indicator rod (48) and the stop body (58).

3. Spring-loaded brake cylinder according to claim 2, **characterised in that** the relative movement between the indicator rod (48) and the stop body (58) is formed by an axial movement of the indicator rod (48) against the stop body (58) which is supported on the spring-loaded brake piston rod (22).

4. Spring-loaded brake cylinder according to one of the preceding claims, **characterised in that** the stop body (58) is formed in a cup shape, with a base (70) having the receiving opening (62) and with a casing wall (72) guided linearly in the spring-loaded brake piston rod (22).

5. Spring-loaded brake cylinder according to claim 4, **characterised in that** the opening of the cup-shaped stop body (58) points away from the indicator rod (48) and the spring means (68) are at least partially surrounded by the casing wall (72) thereof.

6. Spring-loaded brake cylinder according to one of the preceding claims, **characterised in that** the stop body (58) is produced from at least one plastic.

7. Spring-loaded brake cylinder according to claim 6, **characterised in that** a central region of the stop body (58), having the receiving opening (62), is formed as a separate component (74) which has a higher elasticity than the rest of the stop body (58).

8. Spring-loaded brake cylinder according to one of the preceding claims, **characterised in that** the indicator rod (48) is produced in one piece from at least one plastic.

9. Spring-loaded brake cylinder according to one of the preceding claims, **characterised in that** a tool attachment (36) for applying a tool to the threaded spindle (34) is produced in one piece therewith.

10. Spring-loaded brake cylinder according to one of the preceding claims, **characterised in that** the transmission device (46) contains a nut.

11. Spring-loaded brake cylinder according to one of the preceding claims, **characterised in that** it is integrated into a combined service brake and spring-loaded brake cylinder (1), having at least one service brake piston arranged in a service brake cylinder and actuated by a pressure means, which service brake piston limits a service brake chamber, and having a service brake piston rod acting on brake actuation elements, wherein the spring-loaded brake piston rod (22) extends through an opening (24) of a dividing wall (26) between the service brake cylinder and the spring-loaded brake cylinder (4) which separates the service brake cylinder and the spring-loaded brake cylinder (4) from each other.

## Revendications

1. Cylindre (4) de frein à ressort accumulateur pour des véhicules, comprenant au moins un piston (16) de frein à ressort accumulateur, qui peut être actionné par un ressort (12) accumulateur, qui est monté dans une enveloppe (6), qui est délimité d'un côté par une chambre (10) de frein de ressort accumulateur et du côté opposé par une chambre (14) de ressort recevant le ressort (12) accumulateur et qui est relié à une tige (22) de piston de frein à ressort accumulateur et comprenant un dispositif (30) mécanique de desserrage d'urgence pour desserrer d'urgence le cylindre (4) de frein à ressort accumulateur, dans lequel, au moyen du dispositif (30) de desserrage d'urgence, un déplacement axial du piston (6) de frein à ressort accumulateur peut être provoqué à l'encontre de la précontrainte du ressort (12) accumulateur et le dispositif (30) de desserrage d'urgence a une broche (34) filetée fixée de manière à pouvoir tourner sur l'enveloppe (6) et en prise avec un dispositif (46) de transmission maintenu coulissant axialement et sans pouvoir tourner dans le dispositif (30) de desserrage d'urgence, le dispositif (46) de transmission pouvant, pour le desserrage d'urgence du cylindre (4) de frein à ressort accumulateur, être mis en contact avec une surface (42) de contact du piston (16) de frein à ressort accumulateur, ainsi que comprenant un dispositif indicateur ayant une barre d'indicateur, qui indique la position du piston (16) de frein à ressort accumulateur, qui traverse la broche (34) filetée et qui peut coulisser par rapport à celle-ci dans la direction axiale, dans lequel, dans la partie d'une extrémité de la barre (48) d'indicateur, est montée une pièce (58) de butée, qui peut venir en prise avec le dispositif (46) de transmission, **caractérisé en ce que** la pièce (58) de butée est reliée à complémentarité de forme avec la barre (48) d'indicateur par une liaison (60) d'encliquetage ménagée au moyen d'un mouvement relatif axial entre la barre (48) d'indicateur et la pièce (58) de butée, la pièce (58) de butée pouvant s'appuyer élastiquement sur la tige (22) de piston de frein à ressort accumulateur par des moyens (68) à ressort, lorsque la barre (48) d'indicateur est déplacée axialement vers la pièce (58) de butée pour ménager la liaison (60) par encliquetage.

2. Cylindre de frein à ressort accumulateur suivant la revendication 1, **caractérisé en ce que** la pièce (58) de butée est élastique, au moins dans la partie d'un bord d'une ouverture (62) de réception de l'extrémité de la barre (48) d'indicateur, de manière à ce que le bord de l'ouverture (62) de réception puisse, sur la base du mouvement relatif entre la barre (48) d'indicateur et la pièce (58) de butée, passer et s'accrocher derrière un collet (64) annulaire ayant un diamètre plus grand que le diamètre de l'ouverture (62) de réception.

3. Cylindre de frein à ressort accumulateur suivant la revendication 2, **caractérisé en ce que** le mouvement relatif entre la barre (48) d'indicateur et la pièce (58) de butée est formé par un déplacement axial de la barre (48) d'indicateur par rapport à la pièce (58) de butée, qui s'appuie sur la tige (22) de piston de frein à ressort accumulateur.

4. Cylindre de frein à ressort accumulateur suivant l'une des revendications précédentes, **caractérisé en ce que** la pièce (58) de butée est sous la forme d'une tasse à fond (70) ayant une ouverture (62) de réception, ainsi qu'à paroi (72) latérale guidée linéairement dans la tige (22) de piston de frein à ressort accumulateur.

5. Cylindre de frein à ressort accumulateur suivant la revendication 4, **caractérisé en ce que** l'ouverture de la pièce (58) de butée en forme de tasse s'éloigne de la barre (48) d'indicateur et les moyens (68) à ressort sont entourés, au moins en partie, par sa paroi (72) latérale.

6. Cylindre de frein à ressort accumulateur suivant l'une des revendications précédentes, **caractérisé en ce que** la pièce (58) de butée est en au moins une matière plastique.

7. Cylindre de frein à ressort accumulateur suivant la revendication 6, **caractérisé en ce qu'**une partie centrale ayant l'ouverture (62) de réception de la pièce (58) de butée est constituée sous la forme d'une pièce (74) distincte, qui a une élasticité plus grande que le reste de la pièce (58) de butée.

8. Cylindre de frein à ressort accumulateur suivant l'une des revendications précédentes, **caractérisé en ce que** la barre (48) d'indicateur est fabriquée d'une pièce en au moins une matière plastique.

9. Cylindre de frein à ressort accumulateur suivant l'une des revendications précédentes, **caractérisé en ce qu'**une réception (33) d'outil pour mettre un outil sur la broche (34) filetée est fabriquée d'une pièce avec elle.

10. Cylindre de frein à ressort accumulateur suivant l'une des revendications précédentes, **caractérisé en ce que** le dispositif (46) de transmission comporte un écrou.

11. Cylindre de frein à ressort accumulateur suivant l'une des revendications précédentes, **caractérisé en ce qu'**il est intégré dans un cylindre (1) frein de service-frein à ressort accumulateur combiné, ayant au moins un piston de frein de service pouvant être actionné par un fluide sous pression et disposé dans le cylindre de frein de service, piston qui est délimité par une chambre de frein de service et qui est relié à une tige de piston de frein de service agissant sur des éléments d'actionnement du frein, la tige (22) du piston de frein à ressort accumulateur s'étendant dans une ouverture (24) d'une cloison (26) entre le cylindre de frein de service et le cylindre (4) de frein à ressort accumulateur, qui sépare l'un de l'autre le cylindre de frein de service et le cylindre (4) de frein à ressort accumulateur.
